# FASCICULE DE BREVET EUROPEEN

(11) **EP 1 502 234 B1**
(45) Date de publication et mention de la délivrance du brevet: **25.02.2009**
(21) Numéro de dépôt: 02785764.8
(22) Date de dépôt: 29.11.2002
(51) Int. Cl.: G06K 19/07, G06K 19/077

(54) **PROCEDE DE TRANSMISSION DE DONNEES ENTRE UNE CARTE A PUCE ET UN UTILISATEUR, LECTEUR DE CARTE ET CARTE POUR LA MISE EN OEUVRE DE CE PROCEDE**
DATENÜBERTRAGUNGSVERFAHREN ZWISCHEN EINER CHIPKARTE UND EINEM BENUTZER, KARTENLESEGERÄT UND KARTE ZUR DURCHFÜHRUNG DES VERFAHRENS
METHOD FOR DATA TRANSMISSION BETWEEN A SMART CARD AND A USER, CARD READER AND CARD THEREFOR

(30) Priorité: 20.12.2001 FR 0116628
(43) Date de publication de la demande: 02.02.2005
(73) Titulaire: SCHLUMBERGER Systèmes, 92120 Montrouge (FR); Schlumberger Malco, Inc., Owings Mills, MD 21117 (US)
(72) Inventeur: RHELIMI, Alain, F-94230 Cachan (FR)
(74) Mandataire: Cassagne, Philippe M.J.
(86) Numéro de dépôt international: PCT/IB2002/005026
(87) Numéro de publication internationale: WO 2003/054788

(56) Documents cités:
- WO-A-01/84493
- FR-A- 2 783 336

## Description

La présente invention concerne un procédé de transmission sécurisée de données entre une carte à puce et un utilisateur. La présente invention concerne également un terminal lecteur de carte à puce et une carte à puce adaptés pour la mise en oeuvre de ce procédé.

Les cartes à puce électroniques sont des objets normalisés décrits notamment dans les normes ISO 7816. Ces cartes comportent un corps généralement en matière plastique sur lequel est fixée une puce dont les circuits, intégrés sur un substrat silicium, définissent différents éléments fonctionnels et notamment une unité centrale de traitement (CPU) ainsi que des mémoires volatiles (RAM), non volatiles (ROM) et. non volatiles programmables et effaçables électriquement (EEPROM). L'unité centrale (CPU) assure la gestion de données et d'adresses entre les différentes mémoires par l'intermédiaire d'un bus.

L'utilisation des cartes à puces s'est considérablement développée notamment pour des applications sécurisées car elles permettent de stocker des informations confidentielles et notamment des algorithmes et des clés de chiffrement inviolables qui permettent d'identifier leur porteur et ce, pour un grand nombre d'applications : transactions bancaires, accès à des locaux, accès à des réseaux de télécommunication (et en particulier au réseau GSM), etc.

L'accès logiciel à une carte à puces et plus particulièrement à ses fonctions sécuritaires et/ou ses données confidentielles est généralement protégé par un code secret que son utilisateur doit obligatoirement présenter et ce, afin de s'assurer que ce dernier est bien le titulaire légal de la carte. Ce code secret appelé PIN code (PIN étant l'acronyme anglais de Personnal Identification Number) est donc connu que de la carte et que de son titulaire légal.

Lorsque la carte est utilisée par exemple dans un automate bancaire, l'utilisateur doit saisir préalablement à toute autre opération la saisie de son PIN code sur le clavier du terminal. Ce PIN code est alors communiqué par le terminal à la carte, les circuits électroniques de cette dernière comparent alors le code secret saisi par le titulaire au code inscrit dans les mémoires de la carte et ils émettent un signal de validation lorsqu'il y a coïncidence entre les deux.

La saisie du PIN code sur le clavier d'un terminal notamment lorsque ce terminal est un ordinateur connecté à un lecteur de carte à puce par exemple de type e-Gate™ commercialisé par la société Schlumberger, présente des risques. La frappe au clavier expose le PIN à la capture visuelle, par ailleurs le traitement du PIN code par l'ordinateur l'expose soit à un espionnage local soit à un espionnage à distance, lorsque les fraudeurs ont accès via Internet à l'ordinateur.

Les outils à la disposition des fraudeurs sont en effet nombreux. Il peut s'agir de programmes espion résidents dans l'ordinateur. Ils enregistrent les pages Web et les entrées clavier lors de chaque session. Ces informations sont re-expédiées discrètement comme attachement de courrier électronique ou e-mail au fraudeur ou vers son serveur. L'analyse de ces documents permet ensuite au fraudeur de retrouver le PIN code et autres informations financières de l'usager, nom, adresse, numéro de carte, etc. Il peut également s'agir d'agent local qui se substitue au titulaire pour effectuer une transaction à son insu et à ses dépens depuis l'ordinateur. Les paramètres la transaction sont cachés dans un message anodin. Une autre fraude possible consiste dans la prise de contrôle à distance de l'ordinateur par un fraudeur. Celui-ci voit l'écran et agit sur le clavier en l'absence de l'usager ou en sa présence. Le télé-fraudeur peut remplacer l'agent local, mais aussi réussir les tests de reconnaissance de forme, il peut agir au cours d'une vraie transaction pour en modifier les termes et laisser l'usager légitime signer à sa place, etc.

De même, le trajet du PIN code dans le câble reliant l'ordinateur au lecteur ainsi que son passage dans le lecteur présentent également des risques de capture.

La capture du PIN code permet ensuite à un fraudeur d'opérer des transactions à la place de l'usager imprudent qui a laissé sa carte dans le lecteur, voire encore interférer dans une transaction légitime, pour en modifier les termes tels que montant ou bénéficiaire. Il est également possible d'invalider la carte par présentation de faux PIN code au cours d'une transaction légitime ou artificiellement déclenchée.

Pour pallier ces inconvénients, certains ont développé des lecteurs sécurisés avec clavier intégré de sorte que la saisie du PIN code ne transite pas par le terminal. Un tel lecteur présente toutefois l'inconvénient d'être cher.

Le brevet WO 01/84493 décrit un mode de transmission USB entre un terminal et une carte à puce.

La présente invention vise donc à apporter une nouvelle solution au problème précité qui n'ait pas les inconvénients des tentatives de solution déjà connues, cette invention mettant en jeu un procédé pour sécuriser les transactions à distance payées au moyen de cartes de paiement et un dispositif pour sa mise en oeuvre qui sont particulièrement simples et peu coûteux.

Le procédé selon l'invention concerne la transmission de données entre une carte à puce électronique, un terminal tel qu'un ordinateur et un utilisateur, la puce comportant une unité centrale de traitement connectée par l'intermédiaire de bus de données et d'adresses à des mémoires et comportant un ensemble de huit plots de contact connectés électriquement à des plages de contact correspondantes portées par la carte à puce.

Selon l'invention, le précédé de transmission de données est caractérisé en ce que l'unité centrale échanges des données avec le terminal selon des protocoles définis dans la norme USB (Bus Universel Série) par une première et une deuxième plages de contact et en ce que l'unité centrale communique des données à l'utilisateur par une troisième plage de contact reliée à des moyens de communication visuelle ou sonore spécifiques.

Selon une autre caractéristique du procédé de transmission de données objet de la présente invention, la puce électronique communique par l'intermédiaire des moyens de communication sonore ou visuelle des informations confidentielles à l'utilisateur, tel qu'un code secret.

Selon une autre caractéristique du procédé de transmission de données objet de la présente invention, le code secret est un code secret valable qu'une fois, ce code secret étant destiné à être communiquer par l'utilisateur à la carte par l'intermédiaire du terminal pour s'authentifier et activer certains programmes contenus dans ladite unité centrale de chiffrement de données à destination du terminal.

Selon une autre caractéristique du procédé de transmission de données objet de la présente invention, le code secret valable une fois est déduit par l'utilisateur d'informations communiquées par la carte à puce à travers desdits moyens de communication sonore ou visuelle ainsi que d'informations transmises par la carte au terminal à travers la liaison USB.

Selon une autre caractéristique du procédé de transmission de données objet de la présente invention, le code secret valable une fois est également déduit d'un code personnel propre à l'utilisateur.

Selon une autre caractéristique du procédé de transmission de données objet de la présente invention, lors de l'activation des moyens de communication sonore ou visuelle, l'utilisateur doit signaler sa présence à ladite carte en adresser un message approprié par l'intermédiaire du terminal à ladite carte tel que l'enfoncement d'une touche.

La présente invention concerne également un lecteur pour carte à puce électronique munie de plages de contact affleurantes, ce lecteur étant destiné à être relié à un terminal tel qu'un ordinateur.

Selon l'invention, le lecteur est caractérisé en ce qu'il comporte :
- des moyens de liaison électrique destinés à être enfichés dans un port correspondant du terminal ;
- un logement de forme sensiblement plane aptes à recevoir au moins partiellement la carte à puce, le logement comportant des moyens de connexion électrique avec les plages de contact de la carte à puce ;
- des moyens de communication sonores ou visuels, les moyens de communication étant reliés aux moyens de connexion électrique de manière à être commandés par la carte à puce à travers au moins une plage de contact.

Selon une autre caractéristique du lecteur de carte à puce objet de la présente invention, les moyens enfichables comportent quatre broches, ces broches étant destinées à être reliées par l'intermédiaire des moyens de connexion à quatre plages de contact distinctes de la carte à puce, une plage destinée à pouvoir la puce en tension d'alimentation, une plage destinée à la mise à la masse de la puce et deux plages destinées à la communication de données entre la carte avec le terminal.

Selon une autre caractéristique du lecteur de carte à puce objet de la présente invention, la communication des données entre la carte et le terminal est opérée selon des protocoles définis dans la norme USB (Bus Universel Série).

Selon une autre caractéristique du lecteur de carte à puce objet de la présente invention, les moyens de communication sont commandés par une plage de contact assurant une sortie de signaux de données selon un protocole asynchrone.

Selon une autre caractéristique du lecteur de carte à puce objet de la présente invention, les moyens de communication sont formés par une diode électroluminescente.

La présente invention concerne également un objet portatif de type carte à puce comprenant, un corps d'objet, des plages de contact affleurantes et une puce à circuits intégrés, la puce comportant une unité centrale de traitement connectée par l'intermédiaire de bus de données et d'adresses à des mémoires et comportant un ensemble de huit plots de contact connectés électriquement à des plages de contact correspondantes portées par la carte à puce.

Selon l'invention, la carte à puce est caractérisée en ce que l'unité centrale est apte à échanger des données selon des protocoles définis dans la norme USB (Bus Universel Série) par une première et une deuxième plages de contact et en ce que l'unité centrale est également apte à communiquer des données par une troisième plage de contact.

On comprendra mieux les buts, aspects et avantages de la présente invention, d'après la description donnée ci-après de plusieurs modes de réalisation de l'invention, présentés à titre d'exemples non limitatifs, en se référant aux dessins annexés, dans lesquels :
la figure 1 est une vue schématique partielle du système nécessaire à la réalisation d'une transaction électronique et en particulier du lecteur de carte à puce selon l'invention;
la figure 2 est une vue schématique du circuit électrique du lecteur de carte à puce présenté à la figure 1;

En se reportant aux figures, seuls les éléments utiles à la compréhension de l'invention, ont été figurés. Pour faciliter la lecture, les mêmes éléments portent les mêmes numéros d'une figure à l'autre.

L'exemple choisi pour illustrer le procédé d'authentification et le dispositif de mise en oeuvre objet de la présente invention concerne une application de transaction électronique réalisée sur le réseau Internet. Bien évidemment, l'invention n'est pas limitée à cette seule application mais concerne plus généralement toutes les applications sécurisées mettant en oeuvre une carte à puce.

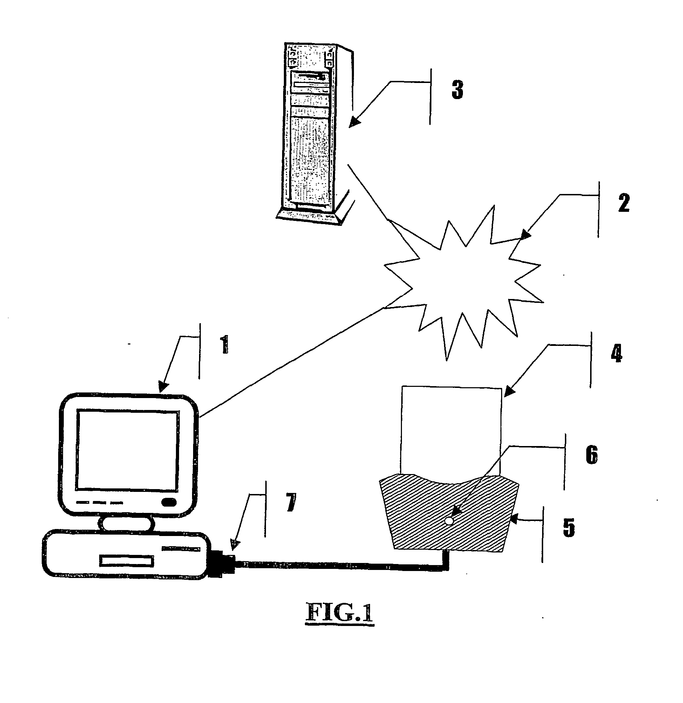

Le système présenté à la figure 1 permet donc de réaliser en toute sécurité une transaction électronique entre un utilisateur et un site marchand

L'utilisateur est installé devant une station qui est par exemple son ordinateur personnel référencé 1. Cet ordinateur 1 est connecté au réseau Internet 2 et permet d'accéder à un site Web marchand 3.

S'étant décidé à acquérir un article par le site 3, le titulaire passe alors un ordre d'achat et communique les données d'identification requises par le fournisseur et notamment les références de sa carte de paiement : pour ce faire le titulaire tape ces données sur le clavier de son ordinateur 1 et les transmet via le réseau Internet au site Web 3. La communication s'opère alors selon le protocole en vigueur sur le site Web 3. Ainsi, le protocole 3D Secure développée par la société Visa peut être mise en oeuvre.

Lorsque la communication est sécurisée, comme avec le protocole 3D Secure, l'identité et l'authenticité de l'usager doivent être garanties. Pour ce faire, l'utilisateur doit adresser des certificats chiffrés reposant sur des méthodes de chiffrement connues qu'elles soient de type symétrique ou à clé secrète (DES) ou asymétrique ou à clé publique (RSA). Afin de garantir l'identité et l'authenticité de l'usager, ces certificats chiffrés mettent en oeuvre des logiciels et des clés que seul l'usager a en sa possession.

L'implantation de telles informations secrètes ne peut se faire dans l'ordinateur 1 dont toutes les ressources sont facilement accessibles notamment via des logiciels espions et autres virus informatiques. Ces données secrètes sont donc préférentiellement stockées et ce, de façon parfaitement inviolable dans le circuit électronique d'une carte à puce, en l'occurrence, sa carte de paiement classique ou bien encore une carte de paiement dédiée aux achats sur Internet.

L'utilisateur dispose donc d'une carte de paiement 4 à puce électronique obtenue auprès d'un établissement financier approprié. Au recto de la carte sont classiquement inscrits le nom du titulaire de la carte, une date d'expiration, un numéro de carte (à 16 chiffres) ainsi qu'éventuellement un numéro de compte.

Cette carte est insérée dans un lecteur de carte 5 connecté à l'ordinateur 1, ce qui permet à ce dernier d'accéder aux ressources logicielles de la carte 4.

L'ordinateur 1 est équipé d'un logiciel approprié, de type émulation de terminal bancaire, et ce de façon à pouvoir adresser au site 3 un certificat d'authentification ou d'intégrité qui sera ensuite adressé par ce dernier à un serveur bancaire pour obtenir l'autorisation de la banque pour accepter la transaction.

L'accès logiciel à la carte déclenchant l'émission de certificat chiffré nécessite préalablement la présentation d'un code secret mémorisé par l'utilisateur et appelé PIN code.

Conformément à l'invention, pour limiter les fraudes possibles, l'utilisateur saisit sur le clavier un PIN code dynamique qui n'est valable qu'une seule fois et qui ne peut donc être rejouer ultérieurement par le logiciel espion souhaitant usurper l'identité de l'usager pour réaliser une transaction frauduleuse. Et par ailleurs comme cela sera développé ci-après, la carte 4 contrôle la présence physique de l'utilisateur au cours de la transaction.

L'invention consiste à faire créer par la carte ce PIN code dynamique valable une fois et de le communiquer directement à l'usager sans transiter par l'ordinateur 1.

Pour ce faire, la carte et le lecteur sont, selon l'invention, du type suivant.

La carte à puce 4 est un objet normalisé tel que notamment défini dans les normes ISO 7810,7816 et 14443 dont les contenus sont intégrés au présent exposé par citation de référence.

La carte se présente sous la forme de parallélépipèdes rectangles plats dont les dimensions sont de l'ordre de 85 mm de longueur, 54 mm de largeur et 760µm d'épaisseur et est formée d'un corps de carte au sein duquel est intégrée une puce.

Le corps de carte se compose d'une ou plusieurs couches thermoplastiques ou thermodurcissables.

La puce est une plaquette de silicium comportant des circuits intégrés dont la topologie définit différents éléments fonctionnels de la puce reliées entre eux par des lignes de bus de données et d'adresses. Il s'agit notamment d'une unité centrale CPU, d'une mémoire volatile RAM, d'une mémoire non volatile de programme ROM, d'une mémoire non volatile électriquement programmable et effaçable EEPROM ainsi que, selon l'invention, une interface particulière, notamment une interface USB.

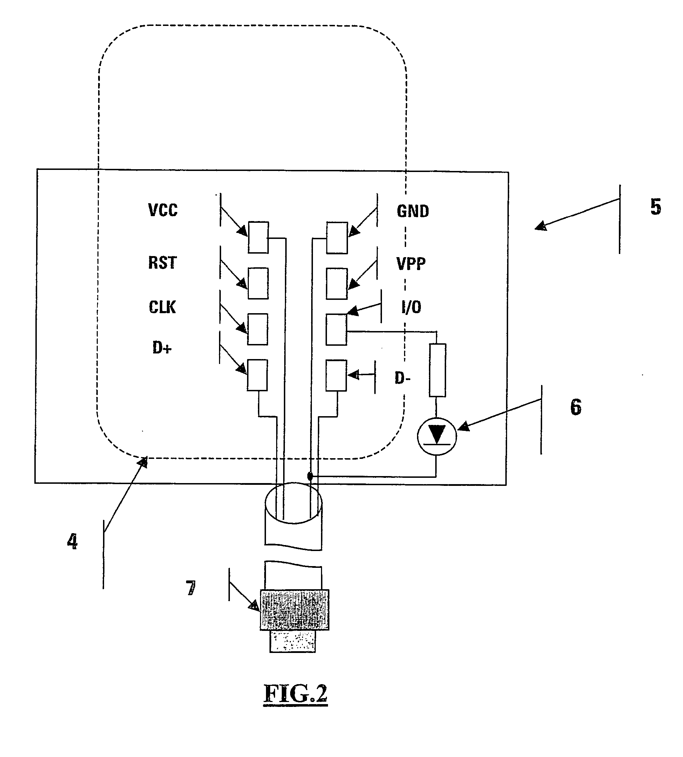

La puce comporte huit plots de contacts normalisés connectés électriquement à huit plages de contact correspondantes affleurantes à la surface du corps de la carte 4 et représentées à la figure 2. Ces huit plots sont : un plot de contact VCC, un plot de contact GND, un plot de contact D+, un plot de contact D-, un plot de contact VPP (alimentation en tension de programmation), un plot de contact RST (réinitialisation), un plot de contact I/O (entrée/sortie mode semi-duplex asynchrone cf. norme 7816) et un plot de contact CLK (entrée signal d'horloge).

La carte selon l'invention est apte à communiquer avec le monde extérieur, c'est-à-dire par exemple l'ordinateur 1, au moyen de quatre plots. Il s'agit du plot de contact VCC qui pourvoit la puce en tension d'alimentation, du plot GND qui assure une mise à la masse de la puce, des plots D+ et D- qui assurent une transmission bidirectionnelle des données.

Lorsque la transmission des données est assurée par les plots D+ et D-, le format de ces données ainsi que les protocoles utilisés sont définis par la norme USB.

Conformément à la norme USB, les plots D+ et D- constituent une paire différentielle, les potentiels présents sur lesdits plots étant en effet opposés l'un à l'autre. Lorsque le potentiel de D+ est supérieur au potentiel de D-, un « 1 » logique est transmis et lorsque le potentiel de D- est supérieur au potentiel de D+, un « 0 » logique est transmis.

L'interface USB de la carte effectue un décodage des données transmises par les plots D+ et D6 et les reformate de manière que lesdites données puissent être gérées par la CPU.

La transmission des données selon la norme USB présente l'avantage d'être rapide et synchrone en mode semi-duplex ce qui supprime le besoin de transmettre un signal d'horloge via le plot CLK.

Le plot I/O se retrouve ainsi libre et peut être utilisé pour transmettre le PIN code dynamique.

Le lecteur 5 selon l'invention qui est destiné à accueillir la carte 4 est donc de type USB. Il comporte un boîtier où est insérée la carte et un cordon munie d'une fiche USB destinée au raccordement du lecteur au port USB correspondant de l'ordinateur 1. Le boîtier comporte un logement destiné à recevoir au moins partiellement la carte à puce 4. Le logement comportant des moyens de guidage et de positionnement de la carte à puce et des moyens de connexion avec les plages de contact affleurantes de la carte à puce. Ces moyens de connexion comportent cinq pattes broches, quatre pattes correspondantes aux plages USB de la carte, c'est-à-dire D+, D-, VCC et GND, et une patte correspondant à la sortie I/O. Cette patte est connectée à un circuit approprié interne au lecteur 5. Ce circuit est par exemple le circuit d'alimentation d'une diode électroluminescente LED 6 montée sur le lecteur de carte 5 de façon à être visible par l'utilisateur.

Grâce à ce circuit et à l'activation de la LED 6, la carte 4 va être à même à communiquer visuellement des données à l'usager et ce sans que l'ordinateur connecté au lecteur 5 ne puissent s'en rendre compte.

L'invention permet de transmettre une clé de diversification de la carte 4 à l'utilisateur sans passer par le truchement de l'ordinateur 1. De ce fait, le composant non sécurisé est écarté de la transmission qui s'établit directement entre la carte 4 et l'utilisateur.

Cette transmission est opérée par la diode électroluminescente 6 connectée à la sortie I/O de la carte lorsque cette dernière est insérée dans le lecteur 5.

Cette diode est directement connectée à la carte et en aucune mesure connectée à l'ordinateur 1. Ce dernier ne dispose donc d'aucun moyen pour connaître l'état de cette diode 6, seule la carte 4 est ainsi capable de piloter cette dernière.

Considérons donc l'utilisateur qui souhaite réaliser sa transaction. Il introduit sa carte 4 dans le lecteur carte 5 et lance le programme approprié de simulation d'un terminal bancaire depuis son ordinateur 1. Ce programme commence par adresser à la carte une demande d'émission d'un certificat authentification via la liaison USB. Cette demande déclenche un programme approprié dans la carte 4, qui déclenche l'activation de la LED 6.

La carte 4 est alors capable de transmettre des codes simples de type morse vers l'utilisateur. Ce code peut être des séquences d'impulsions courtes séparées par des silences ou des séquences de signaux aléatoires.

Considérons à titre d'exemples non limitatifs les principes de codage suivants :
a) Comptage des impulsions identiques séparées par des silences (diode inactive)
Pour simplifier le décodage et minimiser le risque d'erreur, nous ne considérons que des nombres limités d'impulsions inférieures ou égales à 3. Considérons que la LED s'allume une fois, puis après une période de repos donnée, s'allume encore une fois, puis après une seconde période de repos donnée s'allume à nouveau cette fois ci rapidement trois fois. La carte a ainsi transmis à l'utilisateur le code 113.
A ces différents codes, il est possible d'affecter un nombre de 0 à 9 selon la table suivante qui peut alors s'afficher à l'écran de l'ordinateur 1, ou bien encore être notée sur tout autre support.

| Code | Valeur |
|---|---|
| 111 | 0 |
| 112 | 1 |
| 113 | 2 |
| 121 | 3 |
| 123 | 4 |
| 131 | 5 |
| 132 | 6 |
| 133 | 7 |
| 233 | 8 |
| 333 | 9 |

b) Séquence d'impulsions de durée variable (courte ou longue) séparés par des silences
Le codage est très semblable au code Morse, à savoir impulsions de courtes durées entrelacées d'autres de durée double. Considérons que la LED s'allume une première fois longuement, puis une deuxième fois longuement, puis une troisième et quatrième fois brièvement.
La carte a ainsi transmis à l'utilisateur le code LLCC (L pour impulsion longue et C pour impulsion courte).
A ces différents codes, il est possible d'affecter un nombre de 0 à 9 selon la table suivante qui peut alors s'afficher à l'écran de l'ordinateur 1, ou bien encore être notée sur tout autre support.

| Code | Valeur |
|---|---|
| LLLL | 0 |
| LLLC | 1 |
| LLCL | 2 |
| LLCC | 3 |
| LCLL | 4 |
| LCLC | 5 |
| LLCC | 6 |
| LCCC | 7 |
| CLLL | 8 |
| CLLC | 9 |

c) Codage «chenillard » ou le porteur relève un code sur son écran et la visualisation de l'impulsion sur la diode.
La carte démarre un index à vitesse constante qui est visible sur l'écran du terminal. Cet index passe devant des codes, lorsque que la diode est activée, 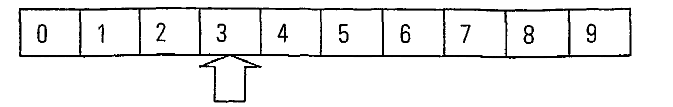 le porteur relève la valeur du code en face de l'indexe.
La carte pilote le passage d'une valeur à l'autre en envoyant des messages à l'ordinateur.

Considérons l'exemple illustré ci-dessous. A l'écran de l'ordinateur 1 défile des nombres. Lorsque la diode s'allume s'affiche le nombre 8. Le code envoyé par la carte est donc 8, et ainsi de suite.

| | | | | | | | | | | | | | | |
|---|---|---|---|---|---|---|---|---|---|---|---|---|---|---|
| Affichage | 0 | 1 | 2 | 3 | 4 | 5 | 6 | 7 | 8 | 9 | 0 | 1 | 2 | 3 |
| Etat LED | E | E | E | E | E | E | E | E | L | E | E | E | E | E |

Conformément à ce qui précède, la carte 4 communique ainsi directement le PIN code dynamique à l'utilisateur ou bien encore n'être qu'une clé servant à diversifier le PIN code de l'utilisateur, à travers par exemple une interface graphique à multiples entrées. Le code transmis indiquant l'entrée valide qui sert de référence à la carte et à l'utilisateur. Seul ces deux entités connaissent cette référence, le PC (non-sécurisé) n'a pas accès au code qui ne passe pas par lui.

On peut utiliser la table de diversification suivante qui peut s'afficher à l'écran de l'ordinateur 1, ou bien encore être notée sur tout autre support. :

| Code/PIN | 0 | 1 | 2 | 3 | 4 | 5 | 6 | 7 | 8 | 9 |
|---|---|---|---|---|---|---|---|---|---|---|
| 0 | 0 | 9 | 8 | 7 | 6 | 5 | 4 | 3 | 2 | 1 |
| 1 | 9 | 0 | 9 | 8 | 7 | 6 | 5 | 4 | 3 | 2 |
| 2 | 8 | 9 | 0 | 9 | 8 | 7 | 6 | 5 | 4 | 3 |
| 3 | 7 | 8 | 9 | 0 | 9 | 8 | 7 | 6 | 5 | 4 |
| 4 | 6 | 7 | 8 | 9 | 0 | 9 | 8 | 7 | 6 | 5 |
| 5 | 5 | 6 | 7 | 8 | 9 | 0 | 9 | 8 | 7 | 6 |
| 6 | 4 | 5 | 6 | 7 | 8 | 9 | 0 | 9 | 8 | 7 |
| 7 | 3 | 4 | 5 | 6 | 7 | 8 | 9 | 0 | 9 | 8 |
| 8 | 2 | 3 | 4 | 5 | 6 | 7 | 8 | 9 | 0 | 9 |
| 9 | 1 | 2 | 3 | 4 | 5 | 6 | 7 | 8 | 9 | 0 |

Supposons le code émis par la carte soit la série ordonnée des nombres 6,8,2,4 et considérons que le PIN code de l'utilisateur soit la série 7,0,3,8 alors le PIN code dynamique pour la cession encours devient la série ordonnée 9,2,9,6. Tout fraudeur qui voit la saisie du code « 9296 » sur le clavier de l'ordinateur 1 est incapable de remonter au code 7,0,3,8 car il n'a pas connaissance du code 6,8,2,4 qu'a seulement été « vu » par l'utilisateur.

Parallèlement à la communication d'un mode de passe dynamique entre une carte et son utilisateur, la carte peut également tester la présence physique de l'utilisateur et ce, pour s'affranchir de logiciels espions qui peuvent prendre le contrôle de l'ordinateur.

En effet, le voyant lumineux 6 du connecteur 5 est avantageusement mis à contribution pour tester la proximité du titulaire et de sa carte 4. Pour ce faire, la carte pilote le voyant lumineux 6 pour générer une série aléatoire (en nombre et en durée) d'impulsions.

L'état du voyant dépend de la seule décision du microprocesseur de la carte.

Le porteur doit appuyer sur une touche (ou activer sa souris) quand le voyant est allumé et relever sa touche (ou désactiver sa souris) quand le voyant est éteint. L'information clavier (ou souris) est retournée sous forme de messages à la carte. Celle-ci corrèle l'enveloppe temporelle de son signal lumineux et celle reconstituée par le truchement des messages. Si les deux enveloppes se superposent (par exemple avec un décalage inférieur à 500 ms) alors la carte établit qu l'utilisateur a vu la carte. Le test de proximité est garanti par la portée visuelle du voyant du connecteur et ne peut être simulé par un agent frauduleux distant (espionnage et pilotage distant via le réseau) ou résidant dans le PC car dans ces différents cas, le fraudeur est virtuellement aveugle.

Chaque transaction sécurisée peut commencer ou finir ou bien encore incorporer ce test de proximité et interdire ainsi :
- la télécommande de la carte par un agent distant frauduleux.
- le verrouillage de la carte par la présentation de 3 faux PIN codes.

Bien évidemment la présente invention n'est pas limitée au mode de réalisation qui n'a été présenté qu'à titre d'exemple non limitatif et englobe donc tous les équivalents techniques

Ainsi, le lecteur 5 qui dans l'exemple illustré est un simple connecteur muni d'une LED 6, c'est à dire qu'il ne comporte aucun circuit électronique, peut être muni d'un circuit électrique commandé par la sortie I/O de la carte coopérant avec un écran (à LED ou autre) permettant l'affichage en clair de données transmises par la carte à l'utilisateur.

La présente invention permet donc d'assurer la mise en place d'un code PIN dynamique entre l'utilisateur et sa carte et ce de façon simple (une diode électroluminescente suffit), peu coûteuse (simple programme mise en oeuvre par la carte) et sûre même (résiste à un espion électronique résident au sein de l'ordinateur). L'ordinateur peut être totalement non sécurisé.

La carte peut également lors du test de proximité, utilisé un des contacts libres en entrée (IO, RST, CLK) . Le connecteur est muni d'un bouton poussoir qui sera actionné par l'utilisateur. Cette manipulation garantie la portée physique de la carte et de son utilisateur. Ces entrées ne sont connectées qu'à la carte ce qui implique aucune simulation possible de la manipulation par un agent frauduleux distant ou local.

## Revendications

1. Procédé de transmission de données entre une carte à puce électronique (4), un terminal tel qu'un ordinateur (1) et un utilisateur, ladite puce comportant une unité centrale de traitement (CPU) connectée par l'intermédiaire de bus de données et d'adresses à des mémoires (ROM, RAM, EEPROM) et comportant un ensemble de huit plots de contact connectés électriquement à des plages de contact correspondantes portées par ladite carte à puce, ladite unité centrale échangeant des données avec ledit terminal (1) selon des protocoles définis dans la norme USB (Bus Universel Série) par une première et une deuxième plages de contact (D+, D-),
**caractérisé en ce que** l'unité centrale communique des données à l'utilisateur par une troisième plage de contact (I/O) reliée à des moyens de communication visuelle ou sonore spécifiques (6) équipant un lecteur de carte (5).

2. Procédé de transmission de données selon la revendication 1, **caractérisé en ce que** ladite puce communique par l'intermédiaire desdits moyens de communication sonore ou visuelle (6) des informations confidentielles à l'utilisateur tel qu'un code secret.

3. Procédé de transmission de données selon la revendication 2, **caractérisé en ce que** ledit code secret est un code secret valable qu'une fois, ledit code secret étant destiné à être communiquer par l'utilisateur à la carte (4) par l'intermédiaire du terminal (1) pour s'authentifier et activer certains programmes contenus dans ladite unité centrale (CPU) de chiffrement de données à destination du terminal (1).

4. Procédé de transmission de données selon la revendication 3, **caractérisé en ce que** le code secret valable une fois est déduit par l'utilisateur d'informations communiquées par la carte à puce (4) à travers desdits moyens de communication sonore ou visuelle (6) ainsi que d'informations transmises par la carte au terminal (1) à travers la liaison USB.

5. Procédé de transmission de données selon l'une quelconque des revendications 3 à 4, **caractérisé en ce que** le code secret valable une fois est également déduit d'un code personnel propre à l'utilisateur.

6. Procédé de transmission de données selon la revendication 2, **caractérisé en ce qu'**en lors de l'activation des moyens de communication sonore ou visuelle, l'utilisateur doit signaler sa présence à ladite carte (4) en adresser un message approprié par l'intermédiaire du terminal (1) à ladite carte (4) tel que l'enfoncement d'une touche.

7. Lecteur (5) pour carte à puce électronique (4) munie de plages de contact affleurantes (9) et destiné à être relié à un terminal tel qu'un ordinateur (1) pour la mise en oeuvre du procédé selon l'une quelconque des revendications 1 à 6, **caractérisé en ce qu'**il comporte :
- des moyens de liaison électrique (7) destinés à être enfichés dans un port correspondant dudit terminal (1) ;
- un logement de forme sensiblement plane aptes à recevoir au moins partiellement la carte à puce, ledit logement comportant des moyens de connexion électrique (8) avec lesdites plages de contact (9) de la carte à puce ;
- des moyens de communication sonores ou visuels (6), lesdits moyens de communication étant reliés auxdits moyens de connexion électrique (8) de manière à être commandés par ladite carte à puce à travers au moins une plage de contact (I/O).

8. Lecteur (5) pour carte à puce électronique (4) selon la revendication 7, **caractérisé en ce que** lesdits moyens enfichables (7) comportent quatre broches, ces broches étant destinées à être reliées par l'intermédiaire desdits moyens de connexion (8) à quatre plages de contact distinctes de la carte à puce, une plage destinée à pouvoir la puce en tension d'alimentation (VCC), une plage destinée à la mise à la masse de la puce (GND) et deux plages (D+, D-) destinées à la communication de données entre la carte (4) avec ledit terminal (1).

9. Lecteur (5) pour carte à puce électronique (4) selon la revendication 8, **caractérisé en ce que** la communication des données entre la carte (4) et ledit terminal (1) est opérée selon des protocoles définis dans la norme USB (Bus Universel Série).

10. Lecteur (5) pour carte à puce électronique (4) selon l'une quelconque des revendications 7 à 8, **caractérisé en ce que** lesdits moyens de communication sont commandés par une plage de contact (I/O) assurant une sortie de signaux de données selon un protocole asynchrone.

11. Lecteur (5) pour carte à puce électronique (4) selon l'une quelconque des revendications 7 à 9, **caractérisé en ce que** lesdits moyens de communication sont formés par une diode électroluminescente (6).

12. Objet portatif de type carte à puce (4) pour la mise en oeuvre du procédé selon l'une quelconque des revendications 1 à 6 du type comprenant, un corps d'objet, des plages de contact affleurantes (9) et une puce à circuits intégrés, ladite puce comportant une unité centrale de traitement (CPU) connectée par l'intermédiaire de bus de données et d'adresses à des mémoires (ROM, RAM, EEPROM) et comportant un ensemble de huit plots de contact connectés électriquement à des plages de contact correspondantes portées par ladite carte à puce, ladite unité centrale étant apte à échanger des données selon des protocoles définis dans la norme USB (Bus Universel Série) par une première et une deuxième plages de contact (D+, D-) et **caractérisé en ce que** l'unité centrale est également apte à communiquer des données par une troisième plage de contact (I/O).

## Claims

1. A method for transmitting data between a smart or IC card (4), a terminal such as a computer (1) and a user, the said IC comprising a Central Processing Unit (CPU) connected by means of a data and address buses to memories (ROM, RAM, EEPROM) and comprising a set of 8 contact pads connected electrically to corresponding contact lands on the said IC card, the said Central Processing Unit exchanging data with the said terminal (1) in accordance with protocols defined in the USB (Universal Serial Bus) standard by a first and a second contact land (D+, D-), **characterised in that** the Central Processing Unit communicates data to the user via a third (I/O) contact land connected to special visual or audio communication means (6) with which a card reader (5) is equipped.

2. A method for transmitting data according to claim 1, **characterised in that** the said IC communicates confidential information such as a secret code to the user through the said audio or visual means (6).

3. A method for transmitting data according to claim 2, **characterised in that** the said secret code is a secret code that is valid only once, the said secret code being designed to be communicated by the card user (4) through a terminal (1) to authenticate themselves and activate some programs contained in the said Central Processing Unit (CPU) for encrypting the data intended for the terminal (1).

4. A method for transmitting data according to claim 3, **characterised in that** the secret code that is valid only once is deducted by the user from information communicated by the IC card (4) through the said audio or visual communication means (6) and information sent by the card to the terminal (1) through the USB link.

5. A method for transmitting data according to any of claims 3 to 4, **characterised in that** the secret code that is valid only once is also deducted from a personal code specific to the user.

6. A method for transmitting data according to claim 2, **characterised in that** when the audio or visual communication means are activated, the user must inform the said card (4) of their presence by sending an appropriate message through the terminal (1) to the said card (4), for example by pressing a key.

7. An IC card (4) reader (5) with flush contact lands (9) designed to be connected to a terminal such as a computer (1) for the implementation of the method according to any claim from 1 to 6, **characterised in that** it comprises:
- electrical connection means (7) designed to be plugged into a corresponding port of the said terminal (1);
- a slot with a more or less flat shape designed to receive the IC card at least in part, the said slot comprising means for electrical connection (8) with the said contact lands (9) of the IC card;
- audio or visual means of communication (6) which are connected to the said electrical connection means (8) so as to be controlled by the said IC card through at least one (I/O) contact land.

8. An IC card (4) reader (5) according to claim 7, **characterised in that** the said pluggable means (7) comprise four pins, which are designed to be connected through the said connection means (8) to four distinct contact lands on the IC card, one land designed to supply the IC with its power voltage (VCC), one land designed to connect the IC to the ground (GND), and two lands (D+, D-) designed for communicating data between the card (4) with the said terminal (1).

9. An IC card (4) reader (5) according to claim 8, **characterised in that** the communication of data between the card (4) and the said terminal (1) takes place according to protocols defined in the USB (Universal Serial Bus) standard.

10. An IC card (4) reader (5) according to any claim from 7 to 8, **characterised in that** the said communication means are controlled by an (I/O) contact land that acts as the output for data signals according to an asynchronous protocol.

11. An IC card (4) reader (5) according to any claim from 7 to 9, **characterised in that** the said communication means are formed by a light-emitting diode (6).

12. A portable object of the IC cards (4) type for implementing the method according to any claim from 1 to 6 of the type comprising an object body, flush contact lands (9) and an Integrated Circuit, which IC comprises a Central Processing Unit (CPU) connected by means of data and address buses to memories (ROM, RAM, EEPROM) and comprising a set of eight contact pads connected electrically to corresponding contact lands on the said IC card, which Central Processing Unit is capable of exchanging data according to protocols defined in the Universal Serial Bus (USB) standard by a first and second contact land (D+, D-) and **characterised in that** the Central Processing Unit is also capable of communicating data by means of third (I/O) contact land.

## Patentansprüche

1. Verfahren zur Übertragung von Daten zwischen einer elektronischen Chipkarte (4), einem Terminal wie z.B. einem Computer (1) und einem Benutzer. Die besagte Chipkarte ist mit einem Hauptprozessor (CPU) ausgestattet, der über einen Datenbus und Adressen mit Speichereinheiten (ROM, RAM, EEPROM) verbunden ist und mit einer Baugruppe von insgesamt acht Bondpads ausgestattet ist, die elektronisch mit den entsprechenden Kontaktpads verbunden sind, die sich auf der Chipkarte befinden. Der besagte Hauptprozessor tauscht Daten mit dem besagten Terminal (1) gemäß seriellem Bussystemstandard (USB) mittels primärer und sekundärer Kontaktpads (D+, D-) aus, wobei der Hauptprozessor die Daten über ein tertiäres Kontaktpad (I/O) an den Benutzer übermittelt, das mit bestimmten visuellen oder akustischen Kommunikationsmitteln (6) verbunden ist, die sich auf dem Kartenlesegerät (5) befinden.

2. Verfahren zur Übertragung von Daten gemäß Anspruch 1, wobei der besagte Chip über den Datenbus der besagten akustischen oder visuellen Mittel zur Kommunikation (6) von vertraulichen Informationen an den Benutzer, wie z.B. einem Geheimcode, kommuniziert.

3. Verfahren zur Übertragung von Daten gemäß Anspruch 2, wobei der besagte Geheimcode ein einmalig gültiger Geheimcode ist. Der besagte Geheimcode wird vom Benutzer über das Terminal (1) zur Karte (4) übertragen, wodurch eine Authentifizierung erfolgt und bestimmte Programme aufgerufen werden, die sich im besagten Hauptprozessor (CPU) zur Verschlüsselung der Daten mit dem Terminal (1) als Ziel befinden.

4. Verfahren zur Übertragung von Daten gemäß Anspruch 3, wobei der einmalig gültige Geheimcode vom Benutzer der Informationen von der Chipkarte (4) abgerufen und über die besagten akustischen und visuellen Kommunikationsmittel (6) sowie von der Chipkarte zum Terminal (1) über einen USB-Anschluss übertragen werden.

5. Verfahren zur Übertragung von Daten gemäß einem der Ansprüche 3 bis 4, wobei der einmalig gültige Geheimcode durch einen dem Benutzer zugehörigen persönlichen Code abgerufen wird.

6. Verfahren zur Übertragung von Daten gemäß Anspruch 2, wobei der Benutzer bei Aktivierung der akustischen und visuellen Kommunikationsmittel seine Anwesenheit der besagten Karte (4) signalisieren muss, indem er eine entsprechende Meldung, wie z.B. die Betätigung einer Taste, über das Terminal (1) an die besagte Karte (4) sendet.

7. Lesegerät (5) für die elektronische Chipkarte (4), die mit ebenen Kontaktpads ausgestattet ist und das dafür gedacht ist, an ein Terminal wie z.B. einen Computer (1) zur Durchführung des Verfahrens gemäß einem der Ansprüche 1 bis 6 angeschlossen zu werden, was folgendes beinhaltet:
- elektrische Anschlusselemente (7), die an einem entsprechenden Port des besagten Terminals (1) angeschlossen werden sollen;
- ein erkennbar gerader Steckplatz, der die Chipkarte teilweise aufnehmen kann. Der besagte Steckplatz verfügt über elektrische Verbindungselemente (8) mit den besagten Kontaktpads (9) der Chipkarte;
- akustische und visuelle Kommunikationsmittel (6). Die besagten Kommunikationsmittel, die mit den besagten elektrischen Verbindungselementen (8) so verbunden sind, dass sie von der besagten Chipkarte über mindestens ein Kontaktpad (I/O) gesteuert werden können.

8. Lesegerät (5) für die elektronische Chipkarte (4) gemäß Anspruch 7, wobei die besagten Anschlusselemente (7) mit vier Stiften ausgestattet sind. Diese Stifte werden über die Verbindungselemente (8) mit vier verschiedenen Kontaktpads der Chipkarte verbunden. Ein Kontakt als Versorgungsspannung für den Chip (VCC), ein Kontakt für die Masse (GND) und zwei Kontakte (D+, D-) für die Übertragung der Daten zwischen der Karte (4) und dem besagten Terminal (1).

9. Lesegerät (5) für die elektronische Chipkarte (4) gemäß Anspruch 8, wobei die Übertragung der Daten zwischen der Karte (4) und dem besagten Terminal (1) gemäß USB-Standard (Serielles Bussystem) erfolgt.

10. Lesegerät (5) für die elektronische Chipkarte (4) gemäß einem der Ansprüche 7 bis 8, wobei die besagten Kommunikationsmittel durch ein Kontaktpad (I/O) gesteuert werden, wodurch ein Datensignalausgang laut einem asynchronen Protokoll gewährleistet wird.

11. Lesegerät (5) für die elektronische Chipkarte (4) gemäß einem der Ansprüche 7 bis 9, wobei die besagten Kommunikationsmittel einer LED (6) entsprechen.

12. Tragbares Objekt vom Typ Chipkarte (4) zum Durchführen des Verfahrens gemäß einem der Ansprüche 1 bis 6 vom Typ ein Objektgehäuse, ebene Kontaktpads (9) und einen schaltkreisbestückten Chip umfassend. Der besagte Chip ist mit einem Hauptprozessor (CPU) ausgestattet, der besagte Hauptprozessor tauscht Daten mit dem besagten Terminal (1) gemäß seriellem Bussystemstandard (USB) mittels primärer und sekundärer Kontaktpads (D+, D-) aus, wobei der Hauptprozessor die Daten über ein tertiäres Kontaktpad (I/O) übermittelt.
